# EUROPÄISCHE PATENTSCHRIFT

(11) **EP 1 130 935 B1**
(45) Veröffentlichungstag und Bekanntmachung des Hinweises auf die Patenterteilung: **13.04.2016**
(21) Anmeldenummer: 01200655.7
(22) Anmeldetag: 22.02.2001
(51) Int. Cl.: H04W 8/22

(54) **Aktualisierungsverfahren für ein Mobiltelefon**
Upgrade method for a mobile telephone
Procédé de mise à jour pour un téléphone mobile

(30) Priorität: 29.02.2000 DE 10009444
(43) Veröffentlichungstag der Anmeldung: 05.09.2001
(73) Patentinhaber: Telefonaktiebolaget LM Ericsson (publ), 164 83 Stockholm (SE)
(72) Erfinder: Richter, Thomas, 52064 Aachen (DE)
(74) Vertreter: Klunker . Schmitt-Nilson . Hirsch

(56) Entgegenhaltungen:
- WO-A-97/29606
- DE-A1- 19 532 069
- US-A- 5 414 751

## Beschreibung

Die Erfindung betrifft ein Verfahren zum Betrieb eines in ein Datenübertragungsnetzwerk eingebundenen Mobiltelefons, das wenigstens einen Kodier- und Dekodieralgorithmus zum Umwandeln von analogen Sprachdaten in digitale Daten und umgekehrt aufweist, wobei wenigstens ein weiterer Kodier- und Dekodieralgorithmus über eine zwischen dem Mobiltelefon und dem Datenübertragungsnetzwerk aufgebaute Datenübertragungsverbindung an das Mobiltelefon übertragen, von diesem empfangen und in einen nichtflüchtigen Speicher abgelegt wird. Weiter betrifft die Erfindung ein Mobiltelefon mit wenigstens einem Kodier- und Dekodieralgorithmus zum Umwandeln von analogen Sprachdaten in digitale Daten und umgekehrt, das einen nichtflüchtigen Speicher und Mittel zum Empfang mindestens eines weiteren Kodier- und Dekodieralgorithmus über eine zwischen dem Mobiltelefon und einem Datenübertragungsnetzwerk aufgebaute Datenübertragungsverbindung und zum Ablegen in den nichtflüchtigen Speicher aufweist, wobei Mittel zum Umschalten zwischen den Kodier- und Dekodieralgorithmen vorgesehen sind, die jeweils einen bestimmten Kodier- und Dekodieralgorithmus aktivieren.

Die gebräuchlichen Mobiltelefone für digitale, zelluläre Netzwerke verfügen über jeweils einen Kodier- und Dekodieralgorithmus zum Umwandeln von Analog- und Sprachdaten in digitale Daten. Bei diesen Algorithmen handelt es sich im Wesentlichen um Softwareprogramme, die einer schnellen Weiterentwicklung und Verbesserung unterliegen. In den letzten Jahren haben sich mehrere Protokolle durchgesetzt, z.B. "Full Rate", "Half Rate" oder "Enhanced Full Rate". Diese Protokolle werden ständig fortentwickelt, um einerseits die vorhandenen Kanalkapazitäten besser auszunutzen und um andererseits eine verbesserte Sprachqualität zu schaffen. Für Sprachen mit besonderen klanglichen Eigenheiten, z.B. Chinesisch, müssen spezielle Algorithmen verwendet werden, die an die Besonderheiten dieser Sprache angepasst sind. Die Entwicklung und Implementierung derartiger Algorithmen ist sehr aufwendig und kann Monate oder sogar Jahre in Anspruch nehmen. Die verbesserten Algorithmen können jedoch nur bei neuen Mobiltelefonen eingesetzt werden, da die Kodier- und Dekodieralgorithmen zum fest einprogrammierten Betriebssystem des Mobiltelefons gehören, das nach der Herstellung nicht mehr verändert werden kann. Dieser Zustand ist sowohl für den Kunden unbefriedigend, da er die verbesserten Möglichkeiten nicht nutzen kann, als auch für den Hersteller nachteilig, da befürchtet werden muss, dass derartige Mobiltelefone ein schlechtes Image beim Käufer bekommen.

In der WO 97/29606 ist ein Telefonsystem beschreiben, bei dem ein im Mobiltelefon verwendeter Kodier- oder Dekodieralgorithmus automatisch aktualisiert werden kann. Beim Aufbau einer Verbindung wird von einer Basisstation der im Mobiltelefon verwendete Kodier- und Dekodieralgorithmus abgefragt. Wenn im Mobiltelefon nicht der von der Basisstation verwendete Kodier- und Dekodieralgorithmus vorhanden ist, wird dieser von der Basisstation zum Mobiltelefon übertragen, gespeichert und angewendet. Der Benutzer des Mobiltelefons hat keine Möglich auf die Auswahl des Kodier- und Dekodieralgorithmus einzuwirken.

Weiter wird in der US 5 414 751 ein Mobiltelefon beschrieben, bei dem das im Mobiltelefon verwendete Betriebssystem verändert werden kann. Dazu wird die im Mobiltelefon verwendete Version des Betriebssystems vor der Aktualisierung überprüft, wobei jedoch eine Aktualisierung des Betriebssystems vom Mobiltelefon durch eine besondere Anforderung bei der Basisstation ausgelöst wird.

Der Erfindung liegt daher das Problem zugrunde, ein Verfahren zum Betrieb eines Mobiltelefons und ein Mobiltelefon der eingangs genannten Art anzugeben, bei denen die genannten Nachteile vermieden werden.

Zur Lösung ist bei einem erfindungsgemäßen Verfahren vorgesehen, dass ein Benutzer zwischen den im Speicher abgespeicherten Kodier- und Dekodieralgorithmen auswählen kann und für eine Kommunikation der vom Benutzer ausgewählte Kodier- und Dekodieralgorithmus verwendet wird.

Die üblichen Mobiltelefone sind für den Betrieb in digitalen, zellulären Netzwerken ausgelegt. Standardmäßig werden sie bei der Herstellung mit einem bestimmten Kodier- und Dekodieralgorithmus ausgestattet, wobei jeweils ein aktueller Standard verwendet wird. Sobald ein neuer, verbesserter Standard zur Verfügung steht, kann dieser an das Mobiltelefon übertragen und in einen nicht flüchtigen Speicher gespeichert werden. Dem Benutzer wird erfindungsgemäß die Möglichkeit gegeben, entweder den neuen oder den alten Algorithmus auszuwählen. Wird der neue Algorithmus ausgewählt, so wird dieser Kodier- und Dekodieralgorithmus anschließend für die Umwandlung der Sprachdaten benutzt, wobei jeweils nur zueinander passende Kodier- und Dekodieralgorithmen verwendet werden können. Der Benutzer kann entweder direkt nach dem Herunterladen des neuen Algorithmus eine Auswahl zwischen den verschiedenen Algorithmen vornehmen oder er kann später den Algorithmus wechseln. Es kann zum Beispiel vorgesehen sein, eine höhere Datenübertragungsrate bei verbesserter Sprachqualität zu einem höheren Preis zu nutzen, oder bei geringeren Qualitätsansprüchen eine Übertragung bei einer verringerten Kanalkapazität in Anspruch zu nehmen. Wenn bei einem Mobiltelefon verschiedene Algorithmen implementiert sind, kann es auch in Gebieten betrieben werden, in denen die aktuellen Algorithmen noch nicht zur Verfügung stehen.

Vorteilhafterweise wird zum Aufbau der Datenübertragungsverbindung zum Übertragen des Kodier- und Dekodieralgorithmus eine SMS-Nachricht vom Netzwerk an das Mobiltelefon gesandt, oder es erfolgt ein Direktanruf am Mobiltelefon, um einen Anruf des Mobiltelefons bei dem Netzwerk auszulösen. Der Benutzer kann dadurch auf einfache Weise über neue Möglichkeiten und Eigenschaften informiert werden. Falls er es wünscht, kann er sich die neuen Algorithmen bei Bedarf über das Netzwerk herunterladen. Er kann jedoch die Implementierung einer neuen Software auch ablehnen, oder zu einem späteren Zeitpunkt vornehmen.

Ein besonders großer Anwendungsbereich ergibt sich, wenn die Datenübertragungsverbindung der GSM-Norm, insbesondere den Protokollen DCS 1800 oder PCS 1900, entspricht. Ein derartiges Verfahren kann bei praktisch allen, gegenwärtig verwendeten Mobiltelefonen eingesetzt werden. Auch bei zukünftigen Weiterentwicklungen der GSM-Norm lässt sich das erfindungsgemäße Verfahren anwenden.

Eine besonders zuverlässige Funktion ergibt sich, wenn am Ende der Datenübertragung bzw. nach einem Teil der Datenübertragung eine Prüfsumme übertragen wird, die mit einer von dem Mobiltelefon aus den übertragenen Daten errechneten Prüfsumme verglichen wird, wobei die Datenübertragung bei identischen Prüfsummen beendet wird und bei unterschiedlichen Prüfsummen wiederholt wird. Auf diese Weise lassen sich Fehler während der Datenübertragung aufspüren und es wird verhindert, dass es zu einem Programmabsturz aufgrund eines fehlerhaft übertragenen Algorithmus kommt. Der gesamte Algorithmus wird dazu in verschiedene Pakete aufgeteilt, die jeweils einzeln gesendet werden, wobei nach jedem Teil die erfolgreiche Datenübertragung geprüft wird. Ein heruntergeladener Algorithmus wird nur zur Benutzung freigegeben, wenn er fehlerfrei geladen werden konnte. Andernfalls wird er gelöscht und der belegte Speicherbereich wird wieder freigegeben.

Die Aufgabe wird auch durch ein Mobiltelefon der eingangs genannten Art gelöst, bei dem der zu verwendende Kodier- und Dekodieralgorithmus aus den im Speicher abgespeicherten Kodier- und Dekodieralgorithmen vom Benutzer auswählbar ist.

In einer Weiterbildung der Erfindung ist vorgesehen, dass der nicht flüchtige Speicher als EEPROM oder FlashPROM ausgebildet ist. Derartige Speicher gewährleisten eine von dem Akku des Mobiltelefons unabhängige Sicherung der Daten und bleiben auch ohne Stromversorgung erhalten.

Besonders bevorzugt werden Mobiltelefone, die Mittel zum Umschalten zwischen den Kodier- und Dekodieralgorithmen aufweisen, wobei jeweils ein bastimenter kodier-und Dekodieralgorthmus aktiviert wird. Diese Funktion Kann in das Betriebssystem des Mobiltelefons integriert werden, indem beim Einschalten ermittelt wird, welche Kodier- und Dekodieralgorithmen vorhanden sind. Diese werden dem Benutzer angezeigt, der sich für einen bestimmten Kodier- und Dekodieralgorithmus entscheiden muss. Der gewünschte Algorithmus wird durch ein Menü ausgewählt und aktiviert. Es kann auch vorgesehen sein, dass dem Benutzer nur diejenigen Algorithmen zur Auswahl angezeigt werden, die von demjenigen Netz unterstützt werden, in das das Mobiltelefon augenblicklich eingebucht ist.

Weitere Vorteile und Einzelheiten der Erfindung ergeben sich aus dem im folgenden beschriebenen Ausführungsbeispiel sowie anhand der Figuren. Die Figuren sind schematische Darstellungen und zeigen:
- Fig. 1: ein erfindungsgemäßes Mobiltelefon während einer Datenübertragungsverbindung mit dem Netzwerk;
- Fig. 2: die Umwandlung von Funkwellen in Sprachsignale und umgekehrt in Form eines Schaubilds.

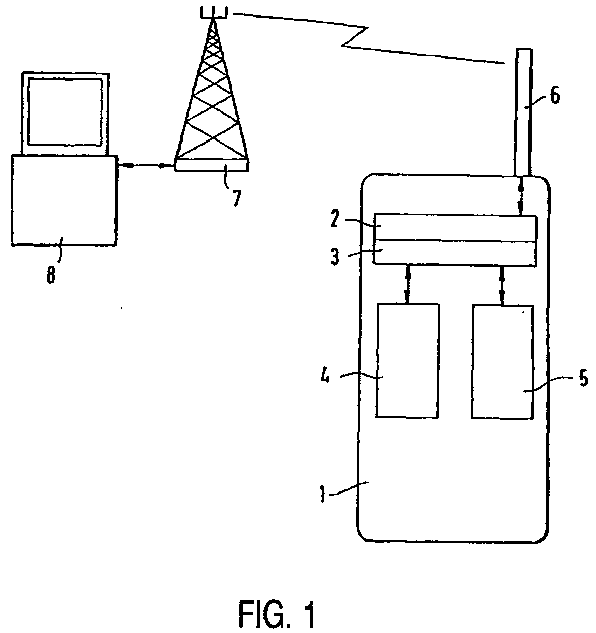

Fig. 1 zeigt in einer schematischen Darstellung ein Mobiltelefon 1 mit einer Sender/ Empfänger-Einheit 2, einer Steuereinheit 3, einem ersten Speicher 4 sowie einem zweiten Speicher 5. Über eine Antenne 6 steht das Mobiltelefon 1 mit einer Sende/Empfangsstation 7 eines Netzwerks in Funkverbindung. Diese Sende/Empfangsstation 7 ist an einen Netzwerkrechner 8 angeschlossen. Die Speicher 4, 5 können entweder separat ausgebildet sein oder ein einziger Speicher kann in mehrere Bereiche eingeteilt sein.

Zum Aufbau einer Datenübertragungsverbindung zum Übertragen des Kodier- und Dekodieralgorithmus wird von dem Netzwerkrechner 8 über die Sende/Empfangsstation 7 eine SMS-Nachricht an das Mobiltelefon 1 gesendet, worauf ein Anruf des Mobiltelefons 1 bei dem Netzwerk ausgelöst wird. Dadurch wird eine Datenübertragungsverbindung zwischen dem Mobiltelefon 1 und dem Netzwerkrechner 8 aufgebaut. Der Netzwerkrechner 8 sendet den neuen Kodier-Dekodieralgorithmus über die Sende/Empfangsstation 7 an das Mobiltelefon 1, das die Signale über seine Antenne 6 empfängt und an die Sender/ Empfänger-Einheit 2 weiterleitet. Die Steuereinheit 3 prüft, welcher der Speicher 4 oder 5 zum Ablegen des Kodier- und Dekodieralgorithmus verwendet werden kann. Wenn beispielsweise im Augenblick Speicher 4 aktiviert ist, wird der neu heruntergeladene Algorithmus in Speicher 5 abgelegt. Falls Speicher 5 belegt sein sollte, wird dieser Speicherbereich gelöscht und wieder zum Beschreiben freigegeben. Alternativ kann der Kodier- und Dekodieralgorithmus auch in einem anderen freien Speicherbereich gespeichert werden. Die Datenübertragung erfolgt paketweise, wobei nach jeder Teilübertragung eine Prüfsumme von dem Netzwerkrechner 8 an das Mobiltelefon 1 gesendet wird. Die Steuereinheit 3 des Mobiltelefons 1 berechnet ebenfalls unabhängig davon eine Prüfsumme, die mit der von dem Netzwerkrechner 8 gesendeten Prüfsumme verglichen wird. Bei einer fehlerfreien Datenübertragung sind beide Prüfsummen identisch. Andernfalls fordert das Mobiltelefon 1 die Wiederholung der Datenübertragung beim Netzwerkrechner 8 an. Wenn der Kodier- und Dekodieralgorithmus vollständig fehlerfrei an das Mobiltelefon 1 übertragen worden ist, wird der Benutzer durch eine Meldung in der Anzeige des Mobiltelefons 1 darüber informiert. Über das Bedienmenü des Mobiltelefons 1 kann der Benutzer zwischen dem alten Algorithmus im Speicher 4 und dem neuen Algorithmus im Speicher 5 auswählen, wobei jeweils nur ein einziger Algorithmus aktiviert sein darf. Entscheidet sich der Benutzer zur Verwendung des neuen Algorithmus, aktiviert die Steuereinheit 3 den Speicher 5 und deaktiviert gleichzeitig den Speicher 4. Bei weiteren Gesprächen wird dann der neue Kodier- und Dekodieralgorithmus im Speicher 5 benutzt.

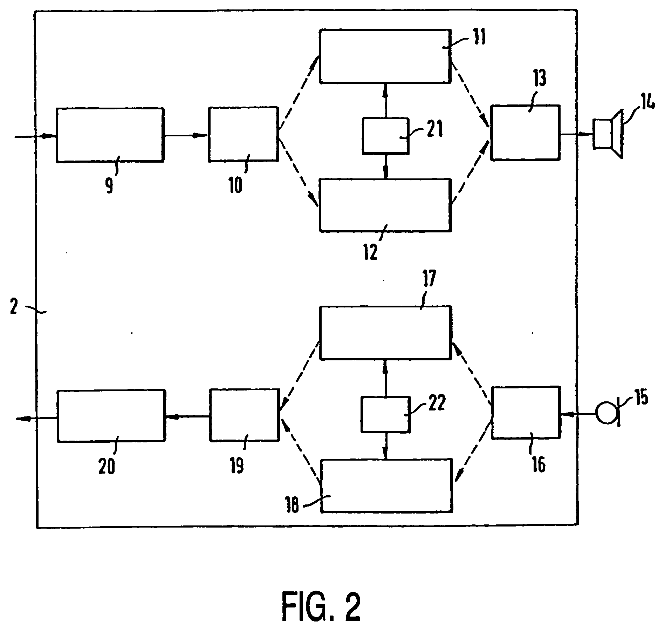

Fig. 2 zeigt schematisch die Sender/Empfänger-Einheit 2. Sie enthält einen Demodulator 9, der die analogen Funkwellen in elektrische Signale umwandelt, die anschließend von einem A/D-Wandler 10 in digitale Signale umgewandelt werden und von einem der Dekodierer 11, 12 weiterverarbeitet werden. Der Dekodierer 11 benutzt den in Speicher 4 abgelegten Kodier- und Dekodieralgorithmus. Der im Dekodierer 12 benutzte Kodier- und Dekodieralgorithmus ist im Speicher 5 abgelegt. Über ein Mittel 21 wird zwischen den Dekodierern 11 und 12 umgeschaltet. Die digitalen Daten werden von demjenigen Dekodierer weiterbearbeitet, der zu dem Kodier- und Dekodieralgorithmus im augenblicklich aktiven Speicher gehört. Falls Speicher 5 aktiviert ist, kommt der Dekodierer 12 zum Einsatz. Der Dekodierer enthält den Sprachalgorithmus, mit dem die Umwandlung der Funksignale in Sprachdaten erfolgt. Die umgewandelten Signale werden an einen D/A-Wandler 13 weitergeleitet, der die digitalen Signale in analoge Signale umsetzt. Die analogen Signale werden über einen im Mobiltelefon 1 integrierten Lautsprecher 14 ausgegeben.

Der umgekehrte Vorgang läuft ab, wenn der Benutzer in ein Mikrofon 15 des Mobiltelefons 1 spricht. Die analogen Schallwellen gelangen vom Mikrofon 15 zum A/D-Wandler 16 und werden in digitale Signale umgesetzt. Zu dem jeweils ausgewählten Dekodierer 11 bzw. 12 ist auch der dazu passende Kodierer 17 bzw. 18 aktiviert. Über das Mittel 22, bei dem es sich beispielsweise um eine softwaregesteuerte Umschaltung handeln kann, wird jeweils einer der Kodierer 17 oder 18 ausgewählt. Die digitalen Signale werden von dem Kodierer so umgesetzt, dass sie per Funk übertragen werden können. Zu diesem Zweck erfolgt die Umwandlung in analoge Signale in einem D/A-Wandler 19 und die Weiterleitung und -verarbeitung in einem Modulator 20. Der Modulator 20 bewirkt die Funkübertragung über die Antenne 6 an die Sende/Empfangsstation 7 und damit an den Netzwerkrechner 8.

## Patentansprüche

1. Verfahren zum Betrieb eines in ein Datenübertragungsnetzwerk (8) eingebundenen Mobiltelefons (1), das wenigstens einen Kodier- und Dekodieralgorithmus zum Umwandeln von analogen Sprachdaten in digitale Daten und umgekehrt aufweist, wobei wenigstens ein weiterer Kodier- und Dekodieralgorithmus über eine zwischen dem Mobiltelefon (1) und dem Datenübertragungsnetzwerk (8) aufgebaute Datenübertragungsverbindung an das Mobiltelefon (1) übertragen, von diesem empfangen und in einen nicht-flüchtigen Speicher (4, 5) abgelegt wird, **dadurch gekennzeichnet, dass** einer der im Speicher (4, 5) des Mobiltelefons (1) abgespeicherten Kodier- und Dekodieralgorithmen durch eine Benutzereingabe am Mobiltelefon (1) ausgewählt wird und für eine Kommunikation der ausgewählte Kodier- und Dekodieralgorithmus verwendet wird.

2. Verfahren nach Anspruch 1, **dadurch gekennzeichnet, dass** die vom Datenübertragungsnetzwerk (8) unterstützten Kodier- und Dekodieralgorithmen zur Auswahl auf dem Mobiltelefons (1) angezeigt werden.

3. Verfahren nach Anspruch 1 oder 2, **dadurch gekennzeichnet, dass** der zu verwendende Kodier- und Dekodieralgorithmus vor dem Aufbau einer Kommunikationsverbindung in Abhängigkeit von Qualität und Preis der Kommunikationsverbindung ausgewählt wird.

4. Verfahren nach einem der Ansprüche 1 bis 3, dadurch gekenntzeichnet, dass nach der Auswahl eines zu verwendenden Kodier- und Dekodieralgorithmen durch den Benutzer das Datenübertragungsnetzwerk (8) über den zu verwendenden Kodier- und Dekodieralgorithmus informiert wird.

5. Verfahren nach einem der Ansprüche 1 bis 4, **dadurch gekennzeichnet, dass** zum Aufbau der Datenübertragungsverbindung zum Übertragen des Kodier- und Dekodieralgorithmus eine SMS-Nachricht vom Datenübertragungsnetzwerk (8) an das Mobiltelefon (1) gesandt wird, oder ein Direktanruf am Mobiltelefon (1) erfolgt, um einen Anruf des Mobiltelefons (1) bei dem Datenübertragungsnetzwerk (8) auszulösen.

6. Verfahren nach einem der Ansprüche 1 bis 5, **dadurch gekennzeichnet, dass** am Ende der Datenübertragung eine Prüfsumme übertragen wird, die mit einer von dem Mobiltelefon (1) aus übertragenen Daten errechneten Prüfsumme verglichen wird, wobei die Datenübertragung bei identischen Prüfsummen beendet wird und bei unterschiedlichen Prüfsummen wiederholt wird.

7. Verfahren nach Anspruch 6, **dadurch gekennzeichnet, dass** die Daten in Paketen übertragen werden und nach Übertragung eines Pakets vom Datenübertragungsnetzwerk (8) eine Prüfsumme übertragen wird, die mit einer im Mobiltelefon (1) gebildeten Prüfsumme aus den übertragenen Daten verglichen wird.

8. Mobiltelefon (1) mit wenigstens einem Kodier- und Dekodieralgorithmus zum Umwandeln von analogen Sprachdaten in digitale Daten und umgekehrt, das einen nichtflüchtigen Speicher (4, 5) und Mittel zum Empfang mindestens eines weiteren Kodier- und Dekodieralgorithmus über eine zwischen dem Mobiltelefon (1) und einem Datenübertragungsnetzwerk (8) aufgebaute Datenübertragungsverbindung und zum Ablegen in den nichtflüchtigen Speicher (4, 5) aufweist, wobei Mittel (21,22) zum Umschalten zwischen den Kodier- und Dekodieralgorithmen vorgesehen sind, die jeweils einen bestimmten Kodier- und Dekodieralgorithmus aktivieren, **dadurch gekennzeichnet, dass** der zu verwendende Kodier- und Dekodieralgorithmus aus den im Speicher (4, 5) abgespeicherten Kodier- und Dekodieralgorithmen durch eine Benutzereingabe am Mobiltelefon (1) auswählbar und aktivierbar ist.

## Claims

1. A method for operating a mobile telephone (1) integrated into a data transmission network (8), said mobile telephone comprising at least one coding and decoding algorithm for converting analogue speech data into digital data and vice versa, wherein at least one further coding and decoding algorithm is transmitted to the mobile telephone (1) via a data transmission connection established between the mobile telephone (1) and the data transmission network (8), is received by said mobile telephone and is stored in a non-volatile memory (4, 5), **characterised in that** one of the coding and decoding algorithms stored in the memory (4, 5) of the mobile telephone (1) is selected by a user input on the mobile telephone (1) and is used for a communication of the selected coding and decoding algorithm.

2. The method according to claim 1, **characterised in that** the coding and decoding algorithms supported by the data transmission network (8) are displayed for selection on the mobile telephone (1).

3. The method according to claim 1 or 2, **characterised in that**, before the establishment of a communication connection, the coding and decoding algorithm to be used is selected depending on the quality and price of the communication connection.

4. The method according to any one of claims 1 to 3, **characterised in that**, after the selection by the user of a coding and decoding algorithm to be used, the data transmission network (8) is informed about the coding and decoding algorithm to be used.

5. The method according to any one of claims 1 to 4, **characterised in that**, for the establishment of the data transmission connection for the transmission of the coding and decoding algorithm, an SMS message is sent by the data transmission network (8) to the mobile telephone (1), or a direct call to the mobile telephone (1) takes place in order to initiate a call on the mobile telephone (1) to the data transmission network (8).

6. The method according to any one of claims 1 to 5, **characterised in that** a check-sum is transmitted at the end of the data transmission, said check-sum being compared with a check-sum calculated by the mobile telephone (1) from transmitted data, wherein the data transmission is ended in the case of identical checksums and is repeated in the case of different checksums.

7. The method according to claim 6, **characterised in that** the data are transmitted in packets and, after transmission of a packet by the data transmission network (8), a check-sum is transmitted which is compared with the check-sum calculated in the mobile telephone (1) from the transmitted data.

8. A mobile telephone (1) with at least one coding and decoding algorithm for converting analogue speech data into digital data and vice versa, which comprises a non-volatile memory (4, 5) and means for receiving at least one further coding and decoding algorithm via a data transmission connection established between the mobile telephone (1) and the data transmission network (8) and for storing the same in the non-volatile memory (4, 5), wherein means (21, 22) are provided for switching between the coding and decoding algorithms, which in each case activate a specific coding and decoding algorithm, **characterised in that** the coding and decoding algorithm to be used can be selected and activated from the coding and decoding algorithms stored in the memory (4, 5) by a user input on the mobile telephone (1).

## Revendications

1. Procédé d'utilisation d'un téléphone mobile (1) intégré dans un réseau de transmission de données (8), qui présente au moins un algorithme de codage et de décodage pour la conversion de données vocales analogiques en données numériques et inversement, au moins un autre algorithme de codage et de décodage étant transmis au téléphone mobile (1) via une connexion de transmission de données établies entre le téléphone mobile (1) et le réseau de transmission de données (8), reçu par celui-ci est enregistré dans une mémoire non volatile (4, 5), **caractérisé en ce qu'**un des algorithmes de codage et de décodage enregistrés dans la mémoire (4, 5) du téléphone mobile (1) est sélectionné par une saisie d'utilisateur sur le téléphone mobile (1) et est utilisé pour une communication de l'algorithme de codage et de décodage sélectionné.

2. Procédé selon la revendication 1, **caractérisé en ce que** les algorithmes de codage et de décodage compatibles avec le réseau de transmission de données (8) sont affichés pour sélection sur le téléphone mobile (1).

3. Procédé selon la revendication 1 ou 2, **caractérisé en ce que** l'algorithme de codage et de décodage utilisé est sélectionné avant l'établissement d'une connexion de communication en fonction de la qualité et du prix de la connexion de communication.

4. Procédé selon l'une quelconque des revendications 1 à 3, **caractérisé en ce que**, après la sélection d'un algorithme de codage et de décodage à utiliser par l'utilisateur, le réseau de transmission de données (8) est informé de l'algorithme de codage et de décodage utilisé.

5. Procédé selon l'une quelconque des revendications 1 à 4, **caractérisé en ce que**, pour établir la connexion de transmission de données permettant de transmettre l'algorithme de codage et de décodage, un message SMS est envoyé par le réseau de transmission de données (8) au téléphone mobile (1) ou un appel direct du téléphone mobile (1) est effectué afin de déclencher un appel direct du téléphone mobile (1) sur le réseau de transmission de données (8).

6. Procédé selon l'une quelconque des revendications 1 à 5, **caractérisé en ce que**, à la fin de la transmission des données, on transmet un total de contrôle qui est comparé à un total de contrôle calculé à partir de données transmises par le téléphone mobile (1), la transmission de données étant arrêtée si les totaux de contrôle sont identiques et répétée si les totaux de contrôle sont différents.

7. Procédé selon la revendication 6, **caractérisé en ce que** les données sont transmises par paquets et que, après le transfert d'un paquet par le réseau de transmission de données (8), on transfère un total de contrôle qui est comparé à un total de contrôle calculé dans le téléphone mobile (1) à partir des données transmises.

8. Téléphone mobile (1) comportant au moins un algorithme de codage et de décodage pour la conversion de données vocales analogiques en données numériques et inversement, qui présente une mémoire non volatile (4, 5) et des moyens de réception d'au moins un autre algorithme de codage et de décodage via une connexion de transmission de données établie entre le téléphone mobile (1) et un réseau de transmission de données (8) et d'enregistrement dans la mémoire non volatile (4, 5), étant prévus des moyens (21, 22) de commutation entre les algorithmes de codage et de décodage qui activent respectivement un certain algorithme de codage et de décodage, **caractérisé en ce que** l'algorithme de codage et de décodage à utiliser peut être sélectionné et activé à partir des algorithmes de codage et de décodage enregistrés dans la mémoire (4, 5) par une saisie d'utilisateur sur le téléphone mobile (1).
